# EUROPÄISCHE PATENTSCHRIFT

(11) **EP 1 128 916 B1**
(45) Veröffentlichungstag und Bekanntmachung des Hinweises auf die Patenterteilung: **05.03.2003**
(21) Anmeldenummer: 99955993.3
(22) Anmeldetag: 15.11.1999
(51) Int. Cl.: B21B 1/08, B21C 37/00, B21D 1/08

(54) **VERFAHREN ZUM HERSTELLEN EINES PROFILS UNTERSCHIEDLICHER WANDSTÄRKE**
METHOD FOR PRODUCING A PROFILE SECTION WITH VARYING WALL THICKNESSES
PROCEDE PERMETTANT DE PRODUIRE UN PROFILE PRESENTANT DIFFERENTES EPAISSEURS

(30) Priorität: 13.11.1998 DE 19852462
(43) Veröffentlichungstag der Anmeldung: 05.09.2001
(73) Patentinhaber: Welser Profile AG, 3341 Ybbsitz (AT)
(72) Erfinder: WELSER, Wolfgang, A-3341 Ybbsitz (AT)
(74) Vertreter: Grünecker, Kinkeldey, Stockmair & Schwanhäusser Anwaltssozietät
(86) Internationale Anmeldenummer: EP9908768
(87) Internationale Veröffentlichungsnummer: WO00029138

(56) Entgegenhaltungen:
- EP-A- 0 296 839
- EP-A- 0 857 526
- EP-A- 0 869 265
- DE-A- 3 343 709
- US-A- 3 737 979
- US-A- 4 798 932
- US-A- 5 042 711

## Beschreibung

Die Erfindung betrifft ein Verfahren zum Herstellen eines Profils unterschiedlicher Wandstärke, bei dem als Ausgangsmaterial Streifen unterschiedlicher Dicke verwendet werden, die kontinuierlich einer Schweißanlage zugeführt und dort auf ihren aufeinander folgenden Längskanten miteinander verschweißt werden, und bei dem die miteinander verschweißten Streifen mittels einer Umformanlage in Form gebracht werden.

Bei Profilen mit im Querschnitt unterschiedlicher Wandstärke ist der Verlauf der Wandstärke im allgemeinen zumindest in erster Näherung dem Spannungsverlauf des im eingebauten Zustands von außen belasteten Profils angepaßt. Material wird nur dort eingesetzt, wo es zur Stabilität des Profils auch wirklich benötigt wird. Die Wandstärke eines derartigen Profils richtet sich also nicht mehr nach der am stärksten belasteten Stelle, wodurch eine wesentlich verbesserte Materialausbeute und ein geringeres Gewicht erzielt werden kann. Üblicherweise werden solche Profile im Strangpreßverfahren oder im Strangziehverfahren in beliebiger Länge hergestellt. Diese Art der Herstellung ist allerdings verhältnismäßig teuer.

Alternativ kann bei einem solchen Profil die erforderliche Wandstärkenverteilung durch Walzen eines Metallstreifens hergestellt werden. Nach dem Walzen wird der Streifen dann mittels Umformen in die gewünschte Profilform gebracht. Auch dieses Verfahren ist aufgrund der aufwendigen Walzwerke verhältnismäßig teuer. Außerdem sind nur wenige Betriebe mit derartigen Walzwerken ausgestattet. Das Walzverfahren hat weiterhin den Nachteil, daß die Maßhaltigkeit der gewalzten, plastisch verformten Bereiche durch teilweise elastische Rückverformung unter den heute üblich gewordenen Anforderungen liegt und daher oft ein nachfolgender Bearbeitungsschritt notwendig ist.

Ein gattungsgemäßes Verfahren ist aus der US 3 737 979 bekannt. Nachteilig bei dem Verfahren der US 3 737 979 ist die geringe Umformfestigkeit und die Vielzahl der zur Profilherstellung notwendigen Verfahrensschritte.

Der Erfindung liegt die Aufgabe zugrunde, das eingangs genannte Verfahren dahingehend zu verbessern, dass die Anzahl der Verfahrensschritte verringert und gleichzeitig die Umformfestigkeit erhöht werden kann.

Diese Aufgabe wird durch die Merkmale des Anspruchs 1 gelöst.

Diese Lösung ist einfach und hat zunächst einmal den Vorteil, daß durch den glatten Wandübergang bereits beim Schweißen ein Profil mit günstigen Spannungsverlauf erzeugt wird, das eine hohe Umformfestigkeit aufweist. Der glatte Übergang der Wandstärke führt zu einer erhöhten mechanischen Belastbarkeit. Die Profile können also genau einem numerisch vorberechneten Spannungsverlauf angepaßt werden. Da der glatte Wandübergang bereits beim Schweißen erzeugt wird, kann auf ein nachfolgendes Walzen der Schweißnaht verzichtet werden.

In einer weiteren vorteilhaften Ausgestaltung können die Streifen der Schweißanlage mit derselben Geschwindigkeit zugeführt werden wie der Umformanlage, so daß ein kontinuierlicher, aufeinander abgestimmter Betrieb der Schweißanlage zusammen mit der Umformanlage möglich ist und die Maschinenlaufzeiten optimal ausgenutzt werden. Auch ist so die kontinuierliche Fertigung beliebig langer Profile möglich.

In einer weiteren vorteilhaften Ausgestaltung können die Streifen der Schweißanlage getrennt zugeführt werden, indem sie beispielsweise von jeweils unterschiedlichen Spulen abgewickelt werden. Dadurch ist ein selektives Austauschen einzelner Streifen, beispielsweise zur Herstellung von Profilen mit leicht verändertem Wandstärkenverlauf, leicht möglich.

In einer weiteren vorteilhaften Ausgestaltung kann das Profil einstückig in einer Länge hergestellt werden, die zumindest der Länge der Streifen entspricht, so daß Profile beliebiger Länge hergestellt werden können.

In einer weiteren vorteilhaften Ausgestaltung können die Streifen mittels einer Laserschweißanlage verschweißt werden. Eine Laserschweißanlage ermöglicht das Verschweißen der Streifen ohne Zufuhr von zusätzlichem Schweißgut. Außerdem ermöglicht das Laserschweißen eine einfache kontinuierliche Zufuhr der zu verschweißenden Werkstücke in die Schweißanlage und ein exaktes Schweißen im Bereich der Längskante.

In einer weiteren vorteilhaften Ausgestaltung können die Streifen nach dem Schweißen in ein Hohlprofil geformt werden. Das Verfahren ist somit nicht auf offene Profile beschränkt. Zur Herstellung von Hohlprofilen kann das fertiggestellte Profil nochmals verschweißt werden.

In einer weiteren vorteilhaften Ausgestaltung können die Profile in der Umformanlage rollgeformt werden. Das Rollformen von Profilen ermöglicht eine besonders kostengünstige Herstellung.

In einer weiteren vorteilhaften Ausgestaltung können als Ausgangsmaterial Streifen von jeweils gleichbleibender Dicke verwendet werden. Derartige Streifen besitzen eine besonders gute Maßhaltigkeit und sind einfach und kostengünstig zu beziehen. Dabei können die Streifen untereinander unterschiedliche Dicken aufweisen. Die Streifen können aber auch einen gleichen oder spiegelsymmetrisch angeordneten Dickenverlauf aufweisen, so daß die Anzahl der Schweißnähte verringert wird.

Erfindungsgemäß wird die Längskante zumindest von Streifen größerer Dicke in Richtung der Streifen kleinerer Dicke, vorzugsweise im wesentlichen bis auf deren Dicke, kontinuierlich angeschrägt. Dadurch werden glatte Übergänge zwischen Streifen mit unterschiedlichen Dicken erzeugt und der Spannungsverlauf im Profil geglättet, so daß die Festigkeit der Profile verbessert wird.

Erfindungsgemäß wird auch die Längskante vor dem Schweißen entsprechend vorbehandelt und zur Ausbildung einer V-förmigen Nut mit der Längskante des benachbarten Streifens kontinuierlich angefast, so daß eine dem Schweißverfahren angepaßte, optimale Verbindung erreicht wird. Beispielsweise können beim Laserschweißverfahren die Fasen gegenüber der Richtung des Laserstrahls so angeordnet sein, daß der Laserstrahl in die Schweißnaht eingekoppelt wird und dadurch zu einer optimalen Erwärmung der Schweißnaht und einem guten Ineinanderfließen des Materials der beiden zu verschweißenden Streifen führt.

In einer weiteren vorteilhaften Ausgestaltung können als Ausgangsmaterial Blechstreifen, vorzugsweise aus einem metallischen Werkstoff wie Aluminium oder Stahl, verwendet werden. Derartige Werkstoffe ergeben besonders stabile Profile und sind leicht zu schweißen und umzuformen.

Im folgenden wird das erfindungsgemäße Verfahren anhand eines Ausführungsbeispiels mit Hilfe von Zeichnungen beispielhaft erläutert.

Es zeigen:
- Fig. 1: ein Ausführungsbeispiel einer Anlage zur Herstellung von Profilen mit unterschiedlicher Wandstärke nach dem erfindungsgemäßen Verfahren;
- Fig. 2a: einen Querschnitt eines Streifens vor einem ersten Verfahrensschritt;
- Fig. 2b: einen Querschnitt eines weiteren Streifens vor einem ersten Verfahrensschritt;
- Fig. 3a: den Querschnitt der Fig. 2a nach einem ersten Verfahrensschritt;
- Fig. 3b: den Querschnitt der Fig. 2b nach einem ersten Verfahrensschritt;
- Fig. 4: einen Querschnitt durch das Profil nach dem Verschweißen der Streifen;
- Fig. 5: einen Querschnitt durch das Profil nach dem Umformen.

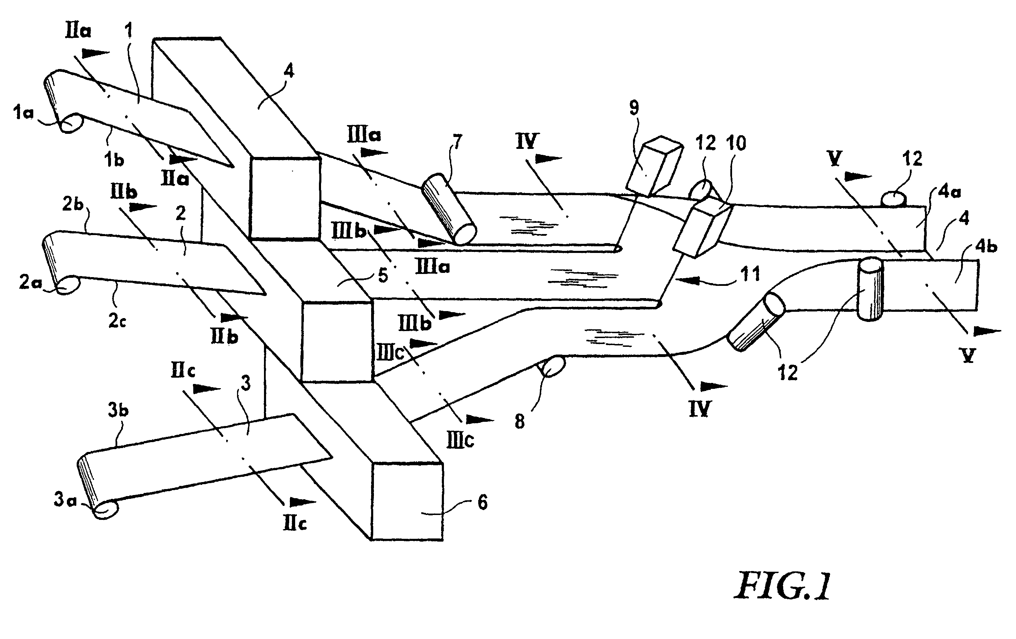

Zunächst werden die Verfahrensschritte anhand des Ausführungsbeispiets der Fig. 1 beschrieben.

In dem durch die Anlage der Fig. 1 beispielhaft beschriebenen Verfahren wird aus drei Blechstreifen 1, 2, 3 ein U-Profil 4 hergestellt. Die Streifen 1, 2, 3 sind auf Spuren 1a, 2a, 3a jeweils aufgewickelt, so daß ohne Schweißen quer zur Längserstreckung Profile bis zu einer Länge hergestellt werden können, die den auf den Spulen 1a, 2a, 3a aufgewikkelten Streifen entspricht. Bei dem gezeigten Ausführungsbeispiel werden die beiden Schenkel 4a und 4b des U-Profils 4 von jeweils zwei gleichen Blechstreifen 1, 3 gebildet. Dies muß jedoch nicht zwangsläufig der Fall sein, je nach Beanspruchung und gewählten anderen Profilformen können auch unterschiedliche Streifen 1, 3 bzw. mehr oder weniger Streifen verwendet werden.

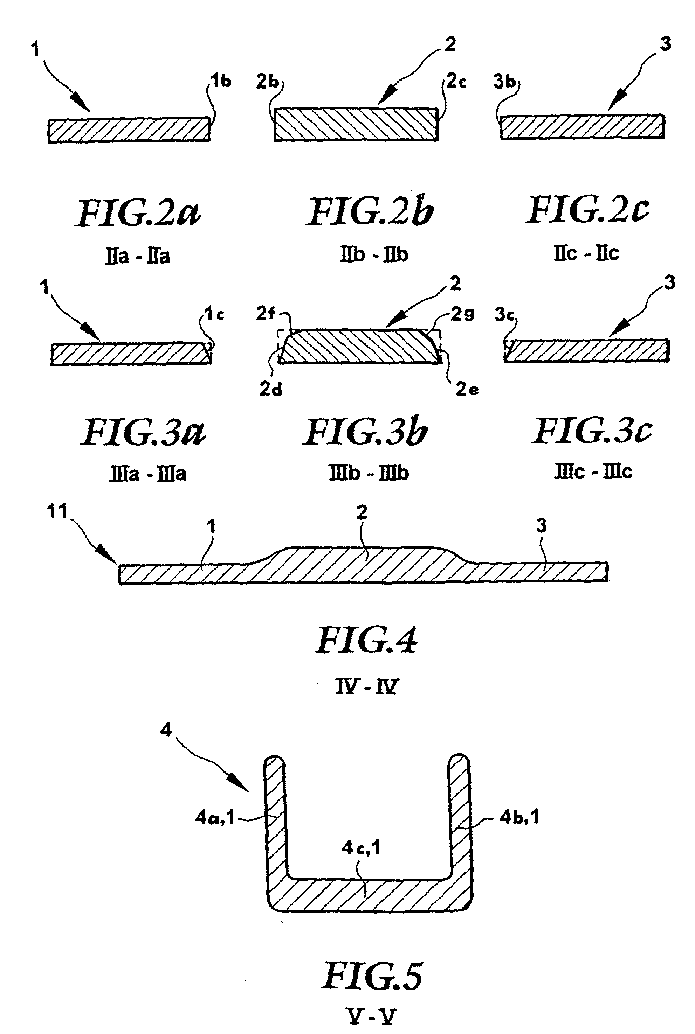

Ein Querschnitt des Streifens 1, der den einen Schenkel des fertigen U-Profils 4 bildet, ist direkt nach dem Abwickeln von der Spule 1a ist in der Fig. 2a gezeigt.

In der Fig. 2b ist der Querschnitt des den Grund des U-Profils 4 bildenden Streifens 2 direkt nach dem Abwickeln gezeigt. Der Streifen 2 ist dicker als die beiden anderen Streifen 1 und 3.

Fig. 2c zeigt den Querschnitt des Streifens 3, der den anderen Schenkel des U-Profils bildet, direkt nach dem Abwickeln. Die jeweiligen zu verschweißenden Längskanten 1b und 2b bzw. 2c und 3b sind einander gegenüberliegend angeordnet.

In der Anlage der Fig. 1 sind die Spulen 1a, 2a, 3a in etwa um die jeweilige Streifenbreite nebeneinander und zusätzlich übereinander versetzt.

Nach dem Abwickeln werden die Streifen 1, 2, 3 Kantenbearbeitungsanlagen 4, 5, 6 zugeführt, die die jeweiligen, zum verschweißen bestimmten Längskanten 1b, 2b, 2c, 3b der Streifen 1, 2, 3 für das Schweißen vorbereiten. Die Kantenbearbeitungsanlage 4 ist dem Streifen 1, die Kantenbearbeitungsanlage 5 dem Streifen 2 und die Kantenbearbeitungsanlage 6 dem Streifen 3 zugeordnet.

Die jeweiligen Querschnitte der Streifen 1, 2, 3 nach dem Bearbeiten der Kanten sind in den Fig. 3a bis 3c dargestellt. Nach Bearbeitung der Längskante 1b weist die Längskante eine leichte Schrägung 1c auf, die der Schrägung 2d des Streifens 2 entspricht. Ebenso weist der Streifen 3 nach Bearbeitung durch die Bearbeitungsanlage 6 eine abgeschrägte Längskante 3c auf, die spiegelsymmetrisch der abgeschrägten Längskante 2e des Streifens 2 entspricht.

Die abgeschrägten Längskanten 1c und 2d sowie 2e und 3c bilden jeweils V-förmige Nuten.

Am Streifen 2 sind durch die Bearbeitungsanlage 5 neben den Anschrägungen 2d und 2e weitere Anschrägungen 2f und 2g angeformt, die sich nach außen hin vom Inneren des Streifens 2 bis auf die Dicke der Streifen 1 und 3 erstrecken. Damit weisen die Anschrägungen 1d und 2d sowie 2e und 3c jeweils die gleiche Höhe auf.

Die Anschrägungen 2f und 2g dienen dazu, einen allmählichen Übergang von der dikkeren Wandstärke des Streifens 2 nach außen hin zu den dünneren Streifen 1, 3 zu ermöglichen, so daß bei Belastung des Profils ein günstigerer Spannungsverlauf erreicht werden kann. Plötzliche Wandübergänge neigen dazu, die Spannungen im Material zu erhöhen und dadurch die Festigkeit und Belastbarkeit des Profils zu senken.

Nach den Bearbeitungsanlagen 4, 5, 6 werden die Streifen über Rollenzoge 7, 8, die hier nur schematisch dargestellt sind, auf eine Ebene gebracht, wobei die nun angeschrägten Längskanten 1c, 2d sowie 2e, 3c am unteren Bereich der Anschrägungen 2f und 2g jeweils aneinanderstoßen.

Mit diesen Anschrägungen 2f und 2g können die Blechstreifen 1, 2, 3 an den aneinanderstoßenden Stellen durch Laserschweißanlagen 9, 10 leichter verschweißt werden. Die eine V-förmige Nut bildenden Längskanten 1c, 2d sowie 2e, 3c erlauben dabei das leichte Einkoppeln des Laserstrahls und dadurch eine gleichmäßige Verteilung des Schweißgutes bzw. des geschmolzenen Werkstoffes über die gesamte Dicke der Streifen. Die gesamte Zustellgeschwindigkeit der Anlage richtet sich dabei nach der Laserschweißanlage 9, 10. Bei einem kontinuierlichen Betrieb der Laserschweißanlagen 9, 10 ist ein kontinuierlicher Betrieb der gesamten Anlage mit konstanter Abrollgeschwindigkeit der Streifen 1, 2, 3 von den Spuren 12, 20, 32 möglich.

Das durch die Laserschweißanlagen 9, 10 verschweißte Profil 11 ist in der Fig. 4 gezeigt. Beim Ausführungsbeispiel wurden die Streifen 1, 2, 3 derart miteinander verschweißt, daß die den Laserschweißanlagen 9, 10 abgewandten Seiten der Blechstreifen 1, 2, 3 in einer Ebene liegen. Durch entsprechende Ausrichtung der Rollenführungen 7, 8 sind die Streifen 1, 2, 3 relativ zueinander zum Verschweißen in beliebigen Höhen einstellbar.

Die Streifen 1, 2, 3 sind über die gesamte Höhe miteinander zu einem Profil unterschiedlicher Wandstärke 11 verbunden, wobei der dickere Streifen 2 den Abschnitt mit größerer Wandstärke bildet.

Anschließend wird das Profil 11 durch eine Umformanlage 12 kaltgerollt und in das U-Profil 4 umgeformt. Dabei sind die Streifen 1, 2, 3 derart angeordnet, daß der Grund 4c des U-Profils 4 vom dickeren Streifen 2 gebildet sind. Die Schweißnähte zwischen den Streifen 1, 2, 3 liegen in etwa auf Höhe der Umbiegungen.

Je nach Einstellung der Umformanlage 12 können auch beliebige andere Profilformen hergestellt werden. Dazu können mehr oder weniger Streifen in unterschiedlichen Dikkenverteilungen von jeweiligen Spulen zugeführt werden. Mit dem dargestellten Verfahren bzw. der dargestellten Anlage können Streifen 1, 2, 3 bis zu einer Dicke von 30mm verarbeitet werden.

## Patentansprüche

1. Verfahren zum Herstellen eines Profils unterschiedlicher Wandstärke, bei dem als Ausgangsmaterial Streifen unterschiedlicher Dicke verwendet werden, die kontinuierlich einer Schweißanlage zugeführt und dort an ihren aneinander anstoßenden Längskanten (1b, 2b, 2c, 3b) miteinander verschweißt werden und bei dem die miteinander verschweißten Streifen mittels einer Umformanlage in Form gebracht werden, **dadurch gekennzeichnet, daß** beim Schweißen ein glatter Übergang zwischen den Streifen unterschiedlicher Dicke erzeugt wird, indem an den Längskanten (1b, 2b, 2c, 3b) der Streifen vor dem Schweißen zur Ausbildung einer V-förmigen Nut mit der Längskante des benachbarten Streifens kontinuierlich Fasen (1c, 2d, 2e, 3c) angeformt werden, und daß an den Längskanten (2b, 2c) vom Streifen größerer Dicke (2) in Richtung der Streifen kleinerer Dicke (1, 3) kontinuierlich Schrägen (2f, 2g) angeformt werden.

2. Verfahren nach Anspruch 1, **dadurch gekennzeichnet, dass** die Streifen (1, 2, 3) der Schweißanlage (9, 10) mit derselben Geschwindigkeit zugeführt werden wie der Umformanlage (12).

3. Verfahren nach einem der obengenannten Ansprüche, **dadurch gekennzeichnet, dass** die Streifen (1, 2, 3) von jeweils unterschiedlichen Spulen (1a, 2a, 3a) abgewickelt werden.

4. Verfahren nach einem der obengenannten Ansprüche, **dadurch gekennzeichnet, dass** die Streifen (1, 2, 3) mittels einer Laserschweißanlage (9, 10) verschweißt werden.

5. Verfahren nach einem der oben genannten Ansprüche, **dadurch gekennzeichnet, dass** das Profil einstückig in einer Länge hergestellt wird, die zumindest der Länge des Streifens entspricht.

6. Verfahren nach einem der obengenannten Ansprüche, **dadurch gekennzeichnet, dass** die Streifen (1, 2, 3) nach dem Schweißen in ein Hohlprofil geformt werden.

7. Verfahren nach einem der obengenannten Ansprüche, **dadurch gekennzeichnet, dass** die Profile (11) in der Umformanlage (12) rollgeformt werden.

8. Verfahren nach einem der obengenannten Ansprüche, **dadurch gekennzeichnet, dass** als Ausgangsmaterial Streifen (1, 2, 3) jeweils konstanter Dicke verwendet werden.

9. Verfahren nach einem der obengenannten Ansprüche, **dadurch gekennzeichnet, dass** als Ausgangsmaterial Blechstreifen (1, 2, 3), vorzugsweise aus einem metallischen Werkstoff wie Aluminium oder Stahl, verwendet werden.

10. Verfahren nach einem der obengenannten Ansprüche, **dadurch gekennzeichnet, dass** die Streifen (1, 2, 3) durchgängig über ihre gesamte Länge jeweils denselben Querschnitt aufweisen.

## Claims

1. A method of producing a profile of varying wall thickness, in which strips of different thicknesses are used as the starting material, which strips are fed continuously to a welding installation and are there welded together at their mutually abutting longitudinal edges (1b, 2b, 2c, 3b), and in which the welded-together strips are shaped by means of a forming installation, **characterised in that**, during welding, a smooth transition is produced between the strips of different thicknesses, by forming chamfers (1c, 2d, 2e, 3c) continuously at the longitudinal edges (1b, 2b, 2c, 3b) of the strips prior to welding to create a V-shaped groove with the longitudinal edge of the adjacent strip, and **in that** bevels (2f, 2g) are formed continuously at the longitudinal edges (2b, 2c) of the larger thickness strip (2) in the direction of the smaller thickness strips (1, 3).

2. A method according to claim 1, **characterised in that** the strips (1, 2, 3) are fed to the welding installation (9, 10) at the same speed as to the forming installation (12).

3. A method according to one of the preceding claims, **characterised in that** the strips (1, 2, 3) are each wound off from different reels (1a, 2a, 3a)

4. A method according to one of the preceding claims, **characterised in that** the strips (1, 2, 3) are welded by means of a laser welding installation (9, 10).

5. A method according to one of the preceding claims, **characterised in that** the profile is produced in one piece in a length which corresponds at least to the length of the strip.

6. A method according to one of the preceding claims, **characterised in that** the strips (1, 2, 3) are formed into a hollow profile after welding.

7. A method according to one of the preceding claims, **characterised in that** the profiles are shaped in the forming installation (12) by rolling.

8. A method according to one of the preceding claims, **characterised in that** strips (1, 2, 3) each of a constant thickness are used as starting material.

9. A method according to one of the preceding claims, **characterised in that** sheet metal strips (1, 2, 3), preferably of a metallic material such as aluminium or steel, are used as starting material.

10. A method according to one of the preceding claims, **characterised in that** the strips (1, 2, 3) each exhibit the same cross section throughout over their entire length.

## Revendications

1. Procédé de fabrication d'un profilé avec différentes épaisseurs de paroi, dans lequel le matériau de base utilisé est formé par des bandes de différentes épaisseurs qui sont acheminées en continu vers une installation de soudage et y sont assemblées par soudage au niveau de leurs chants longitudinaux (1b, 2b, 2c, 3b) aboutés, et dans lequel les bandes assemblées par soudage sont mises en forme dans une installation de formage, **caractérisé en ce que**, pendant le soudage, il se forme une transition adoucie entre les bandes d'épaisseur différente, dans la mesure où des chanfreins (1c, 2d, 2e, 3c) sont réalisés en continu avant le soudage au niveau des chants longitudinaux (1b, 2b, 2c, 3b) des bandes, en vue de former une rainure en V avec le chant longitudinal de la bande contiguë, et **en ce que** des chanfreins (2f, 2g), orientés en direction des bandes de plus faible épaisseur (1, 3), sont réalisés en continu au niveau des chants longitudinaux (2b, 2c) de la bande à plus grande épaisseur (2).

2. Procédé selon la revendication 1, **caractérisé en ce que** les bandes (1, 2, 3) sont acheminées vers l'installation de soudage (9, 10) avec une vitesse identique à celle de l'installation de formage (12).

3. Procédé selon l'une des revendications précédentes, **caractérisé en ce que** les bandes (1, 2, 3) sont déroulées chacune à partir de bobines (1a, 2a, 3a) différentes.

4. Procédé selon l'une des revendications précédentes, **caractérisé en ce que** les bandes (1, 2, 3) sont assemblées par soudage au moyen d'un dispositif de soudage au laser (9, 10).

5. Procédé selon l'une des revendications précédentes, **caractérisé en ce que** le profilé est fabriqué d'une seule pièce dans une longueur donnée, qui correspond au moins à la longueur de la bande.

6. Procédé selon l'une des revendications précédentes, **caractérisé en ce que** les bandes (1, 2, 3) sont formées après le soudage en forme de profilé creux.

7. Procédé selon l'une des revendications précédentes, **caractérisé en ce que** les profilés (11) sont formés par profilage par galets dans l'installation de formage (12).

8. Procédé selon l'une des revendications précédentes, **caractérisé en ce que** le matériau de base utilisé est formé par des bandes (1, 2, 3) d'épaisseur constante chacune.

9. Procédé selon l'une des revendications précédentes, **caractérisé en ce que** le matériau de base utilisé est formé par des bandes (1, 2, 3) de tôle, réalisées de préférence dans un matériau métallique, tel que l'aluminium ou l'acier.

10. Procédé selon l'une des revendications précédentes, **caractérisé en ce que** les bandes (1, 2, 3) possèdent chacune la même section en continu sur toute leur longueur.
